# EUROPÄISCHE PATENTSCHRIFT

(11) **EP 0 668 309 B1**
(45) Veröffentlichungstag und Bekanntmachung des Hinweises auf die Patenterteilung: **11.08.1999**
(21) Anmeldenummer: 94120047.9
(22) Anmeldetag: 17.12.1994
(51) Int. Cl.: C08G 69/16

(54) **Verfahren zur kontinuierlichen hydrolytischen Polymerisation von Laurinlactam**
Process for the continuous hydrolytic polymerisation of laurolactam
Procédé de polymérisation continue hydrolytique du laurinelactame

(30) Priorität: 18.02.1994 DE 4405161
(43) Veröffentlichungstag der Anmeldung: 23.08.1995
(73) Patentinhaber: HÜLS AKTIENGESELLSCHAFT, 45764 Marl (DE)
(72) Erfinder: Meyer, Dr. Klaus Rudolf, D-45527 Hattingen (DE); Ohm, Dr. Hubertus, D-45721 Haltern (DE)

(56) Entgegenhaltungen:
- EP-A- 0 117 495
- EP-A- 0 530 592
- DD-A- 235 798
- DATABASE WPIL, Nr. 74-479 81V, DERWENT PUBLICATIONS LTD., London; & JP-B-49 021 313 (TORAY INDUSTRIES INC.)

## Beschreibung

Gegenstand der Erfindung ist ein Verfahren zur kontinuierlichen hydrolytischen Polymerisation von Laurinlactam, wobei zunächst mittels hydrolytischer Spaltung ein Präpolymer hergestellt wird, das anschließend zu einem hochmolekularen Produkt kondensiert wird.

Die übliche Methode zur Herstellung von Polyamid 12 aus Laurinlactam ist die diskontinuierliche hydrolytische Polymerisation in einem gerührten Reaktionsgefäß, wie sie in verschiedenen Patentanmeldungen beschrieben wird (siehe z. B. DE-OSS 15 70 774, 21 52 194 und 36 21 804).

Diese Methode besitzt unter anderem folgende inhärente Nachteile:
- Die zuzufügende Menge von Wasser, welches eine stark beschleunigende Wirkung auf die Ringspaltung und damit auf die Präpolymerisation besitzt, aber bei den notwendigen Temperaturen auch hohe Dampfdrücke bewirkt, wird durch die Druckfestigkeit des verwendeten Reaktors begrenzt. Da die Kosten großer, gerührter Reaktionskessel mit dem zulässigen Betriebsdruck stark ansteigen, wird gewöhnlich mit relativ geringen Wassermengen gearbeitet, was lange Reaktionszeiten zur Folge hat. Dies führt zu hohen Fertigungskosten.
- Die diskontinuierliche Fahrweise hat eine nur sequentielle Benutzung von Einzelaggregaten, wie z. B. Fördereinrichtungen, Ausfahrfiltern oder Granulatoren, zur Folge. Diese Aggregate müssen daher für Durchsätze ausgelegt werden, die viel höher sind als der mittlere Durchsatz der Gesamtanlage, was zu hohen Kosten führt.
- Beim diskontinuierlichen Betrieb von Kesselanlagen entstehen üblicherweise Probleme durch Material, welches beim Entleeren des Kessels in diesem verbleibt. Im vorliegenden Fall kommt es unter verlängerten Verweilzeiten zu störenden Nebenreaktionen des entstandenen Polyamid 12. Produktreste im Reaktor und in den Leitungen können z. B. zu gelartigen Verunreinigungen im nächsten Ansatz führen.

Die Nachteile einer diskontinuierlichen Verfahrensweise lassen sich durch ein kontinuierliches Polymerisationsverfahren vermeiden.

Für die Polymerisation von Caprolactam zu Polyamid 6 ist diese Vorgehensweise seit geraumer Zeit Stand der Technik, wie z. B. aus H. Ludewig, Faserforschung Textiltechn. 2, 341 - 355 (1951), hervorgeht. Für Caprolactam beschriebene Verfahren sind jedoch ausnahmslos für Laurinlacam nicht anwendbar, da sich dieses Material bezüglich seiner Anforderungen an die Polymerisationsbedingungen (Wassergehalt, Druck, Temperatur, Verweilzeit) völlig anders verhält als Caprolactam.

So ist in der EP-A-0 117 495 (DE-OS 33 06 906) ein Verfahren zur kontinuierlichen Polymerisation von Caprolactam beschrieben, bei dem man das 1 bis 25 Gew.-% Wasser enthaltende Lactam in einer Vorpolymerisationszone unter einem Druck von 1 bis 10 bar unter gleichzeitiger Verdampfung des Wassers innerhalb einer Verweilzeit von 1 bis 10 Minuten auf eine Temperatur von 220 bis 280 °C erhitzt und anschließend in einer Polymerisationszone unter kontinuierlicher Abtrennung des Dampfs weiterpolymerisiert. Bei Verwendung von Laurinlactam anstelle der in dieser Schrift genannten Lactame mit 7 bis 12 Ringgliedern wird nach diesem Verfahren jedoch praktisch kein Umsatz erzielt.

Es gibt bisher nur wenige Entwicklungen speziell für die kontinuierliche hydrolytische Polymerisation von Laurinlactam. Alle zu diesem Gebiet veröffentlichten Erfindungen weisen erhebliche Nachteile auf, durch welche die Wirtschaftlichkeit oder die Produkteigenschaften stark eingeschränkt werden.

So wird in der SU-A 12 08 044 zwingend Phosphorsäure als Katalysator verwendet; der Laurinlactam-Umsatz erreicht nur 99 %. Der verbleibende Restmonomergehalt von 1 % verursacht bei der Verarbeitung und Anwendung des Produktes Probleme. Eine kommerzielle Verwendung dieser Produkte würde eine vorhergehende, aufwendige Entmonomerisierung voraussetzen. Außerdem hätte die Verwendung eines derartigen, stark sauren Katalysators den Nachteil, daß das so hergestellte Polylaurinlactam bei seiner Verarbeitung oder beim Gebrauch unter erhöhter Temperatur einen verstärkten hydrolytischen Abbau erfährt; zusätzlich sind die Polymerisationsreaktoren und die Verarbeitungsmaschinen einer verstärkten Korrosion unterworfen.

Die JP-A 60 041 647 deckt nur den Bereich sehr hoher Temperaturen und Drucke als Verfahrensparameter ab. Unter diesen Bedingungen entstehen jedoch vermehrt Gelpartikel, und es kommt zu Beeinträchtigungen in der Farbe. Auch sind zunächst nur Oligomere zugänglich, deren weitere Polykondensation, z. B. gemäß JP-A 61 166 833, aufwendige Techniken und Aggregate wie Entgasungs-Schneckenmaschinen erfordert.

Das in JP-A 49 021 313 beschriebene Verfahren führt zu Reaktionszeiten, die keine wesentlichen Vorteile gegenüber diskontinuierlicher Batch-Fahrweise ergeben (Verweilzeit insgesamt 13 h). Die beschriebene Fahrweise führt zu Vergelung des Produkts im zweiten Reaktor.

In GB-A 1 468 653 muß erfindungsgemäß Phosphorsäure als Katalysator vorhanden sein; der Entspannungsprozeß wird mit hohem Aufwand isotherm durchgeführt; darüber hinaus hat sich gezeigt, daß die beschriebene Entmonomerisierung in der Praxis nicht durchführbar ist. US-A 4 077 946 ist ähnlich zu werten.

Darüber hinaus beschreibt EP-A 0 530 592 ein kontinuierliches Polymerisationsverfahren in einem komplizierten mehrteiligen Reaktor, der unter einem Temperaturgradienten gehalten werden muß. Zur Herstellung des fertigen Polymeren ist eine Kondensationsanlage mit Rührern erforderlich. Die angegebenen Wassergehalte bei der Polymerisation (1 bis 10 %) liegen außerhalb der Werte für eine maximale Raum/Zeit-Ausbeute. Die demzufolge notwendigen Verweilzeiten für die Präpolymerisation von 7 bis 8 Stunden bieten keinen Vorteil gegenüber dem diskontinuierlichen Verfahren.

Aufgabe der vorliegenden Erfindung war daher die Entwicklung eines apparativ möglichst einfachen und wirtschaftlichen Verfahrens. Darüber hinaus sollten keinerlei Katalysatoren notwendig sein, die am Ende im Produkt verbleiben. Der Restmonomerengehalt des erhaltenen Polymeren sollte dem der diskontinuierlich produzierten Materialien entsprechen oder sogar niedriger liegen. Schließlich sollten die Produkte bezüglich Farbe und Gelgehalt ein sehr gutes Niveau besitzen.

Diese Aufgaben werden durch ein Verfahren zur kontinuierlichen hydrolytischen Polymerisation von Laurinlactam gelöst, bei dem Laurinlactam und Wasser durch eine Pumpe zudosiert werden, gegebenenfalls einen Reaktor mit weitgehend idealer Rückvermischung durchlaufen, anschließend in einem Rohrreaktor zu einem Präpolymeren reagieren, welches dann über ein Entspannungsventil in ein Entgasungsaggregat entspannt wird, von wo aus es ausgefahren wird, wobei
a) der Wassergehalt bei der Präpolymerisation 7 bis 20 Gew.-% beträgt,
b) die Reaktionstemperatur bei der Präpolymerisation 280 bis 320 °C beträgt und
c) das Entspannungsventil so geregelt wird, daß der Arbeitsdruck über dem Wasserdampf-Partialdruck der Reaktionsmischung liegt.

Bevorzugt werden Laurinlactam und Wasser getrennt mit je einer Pumpe gefördert, wobei bevorzugt Kolbenpumpen oder Kolbenmembranpumpen eingesetzt werden.

Im gegebenenfalls sich anschließenden Reaktor mit weitgehend idealer Rückvermischung werden die Stoffströme vermischt und schonend auf Reaktionstemperatur gebracht. Hierfür kann beispielsweise ein geeignet ausgelegter Rührreaktor, bevorzugt jedoch ein Schlaufenreaktor, eingesetzt werden. Der Schlaufenreaktor enthält eine Pumpe, die das eingespeiste Material bevorzugt mit dem 10- bis 100-fachen des eingespeisten Stroms im Kreis pumpt.

Die mittlere Verweilzeit des reagierenden Materials im Rohrreaktor beträgt bevorzugt 0,5 bis 6 Stunden und besonders bevorzugt 1,5 bis 4 Stunden. Zur Verschmälerung der Verweilzeitverteilung kann das Rohr gegebenenfalls ganz oder teilweise mit Statik-Mischelementen ausgestattet sein.

Durch die Regelung des Entspannungsventils kann ein bestimmter, frei wählbarer Verfahrensdruck im Innern des Rohrreaktors aufrechterhalten werden. Der Solldruck wird so gewählt, daß jegliche Bildung von Dampfblasen im Rohrreaktor verhindert wird.

Als Entgasungsaggregat kann z. B. eine Schneckenmaschine, ein Dünnschichtverdampfer, ein Filmtruder oder ein Flashbehälter eingesetzt werden. Besonders geeignet ist ein Flashbehälter, dessen Innendruck durch ein Regelventil in der abgehenden Brüdenleitung geregelt werden kann. Da die Schmelze infolge des Verdampfungsprozesses abkühlt, kann es, abhängig vom verwendeten Wassergehalt, zweckmäßig sein, die zugeführte Schmelze nach der Entspannung als Film über die Innenwandung eines beheizten, senkrechten Rohres zu leiten, um leichter Wärme zuführen zu können. Vorteilhafterweise beträgt die mittlere Verweilzeit der Schmelze im Flashbehälter 1 bis 3 Stunden.

Gegebenenfalls verfügt die Anlage über eine weitere Entgasungsstufe, die aus den gleichen Aggregaten bestehen kann wie die erste Entgasungsstufe. Auch hier kann besonders vorteilhaft ein Flashbehälter eingesetzt werden. In diesem Fall sollte die Möglichkeit bestehen, Unterdruck anzulegen. Eine andere bevorzugte Möglichkeit ist hier die Verwendung einer Entgasungsschneckenmaschine.

Im vorgeschalteten Reaktor mit weitgehend idealer Rückvermischung oder, falls ein solcher nicht installiert ist, in den ersten Abschnitten des Rohrreaktors beginnt die hydrolytische Spaltung des Laurinlactams. Wird beispielsweise ein Schlaufenreaktor eingesetzt, so vollzieht sich dort der Spaltvorgang bis zu einem Umsatz von ca. 30 bis 40 %. Im weiteren Verlauf der Reaktion wird die Spaltung bis zu einem Restgehalt von Laurinlactam von ca. 0,3 Gew.-% vervollständigt. Gleichzeitig erfolgt die Polykondensation bis zu einem zahlenmittleren Polymerisationsgrad (abhängig vom Wassergehalt) von 10 bis 20.

Der überwiegende Teil des Wassers wird im ersten Entspannungsvorgang entfernt, daraufhin setzt die weitere Kondensation ein. Bevorzugt wird im Entspannungsgefäß eine gewisse Füllhöhe an Polymerschmelze aufrechterhalten, damit dem Material genügend Verweilzeit für die Kondensation zur Verfügung steht.

Das im Entgasungsaggregat weitgehend vom Wasser befreite Produkt wird bevorzugt über eine Pumpe, besonders bevorzugt eine Zahnradpumpe, ausgefahren.

Im gegebenenfalls vorhandenen zweiten Entgasungsaggregat wird ein weiterer Entspannungsvorgang durchgeführt. Auf diese Weise können noch höhere Molekulargewichte erreicht werden.

An beliebiger Stelle der Anlage können weiterhin auch Zusatzstoffe wie z. B. Molekulargewichtsregler (etwa Laurinsäure oder Dodecandisäure), Comonomere wie etwa Caprolactam, ω-Aminoundecansäure oder AH-Salzlösung oder, falls erwünscht, auch Katalysatoren wie etwa Phosphorsäure oder hypophosphorige Säure eingespeist werden. Auch das Einspeisen von Stabilisatoren ist möglich.

Das erfindungsgemäße Verfahren weist insbesondere folgende Vorteile auf:
- Unter den angegebenen Bedingungen reicht eine mittlere Verweilzeit im Rohrreaktor von 0,5 bis 6 Stunden (abhängig von der gewählten Temperatur und dem Wassergehalt) für einen praktisch vollständigen Umsatz aus. Dies führt zu einer hohen Raum-Zeit-Ausbeute.
- Der Entspannungsprozeß läuft, trotz des extremen Druckgefälles, problemlos beherrschbar ab.
- Entgegen der bisherigen Expertenmeinung kommt es bei Verwendung eines Flashbehälters als Entspannungsaggregat zu keinerlei Anbackungen, auch nicht nach sehr langen Betriebszeiten, obwohl der Flashbehälter weder über einen Rührer noch über sonstige Mittel zur Abreinigung der Oberflächen verfügen muß.
- Das erhaltene Polyamid 12 besitzt einen niedrigen Restmonomerengehalt, eine hervorragende Farbe und ist frei von Gelbestandteilen.

Im folgenden wird die Erfindung beispielhaft erläutert.

### Beispiel 1:

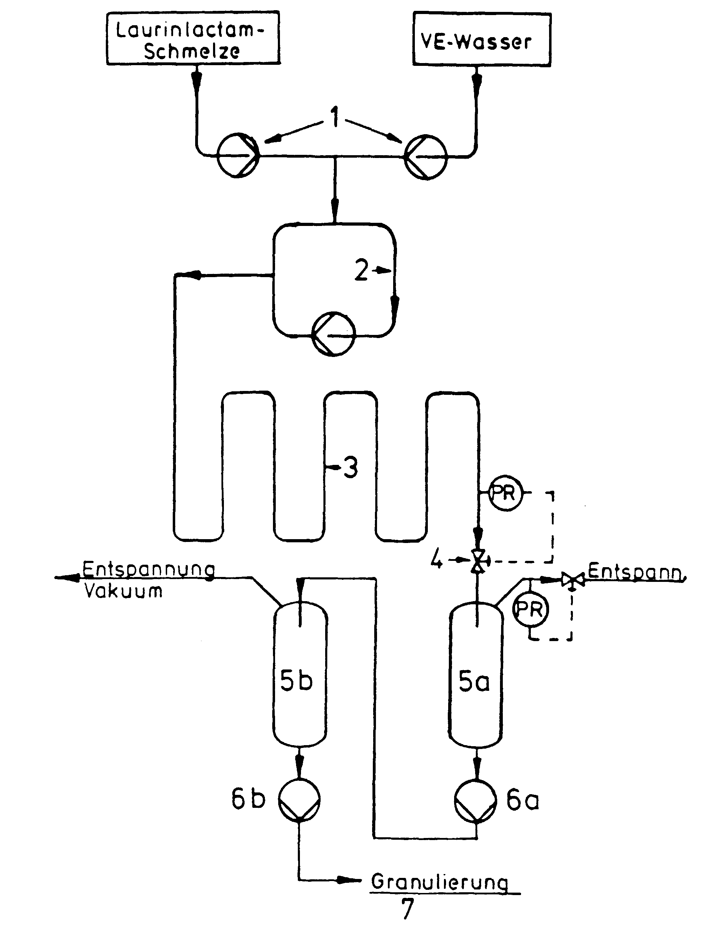

In einer kontinuierlichen Anlage (siehe Fig. 1), bestehend aus den Komponenten
**1** je einer Kolbenpumpe für Laurinlactam bzw. Wasser,
**2** einem 17 l Gesamtvolumen fassenden Kreislaufreaktor mit Umlaufpumpe,
**3** einem Rohrreaktor mit 100 mm Innendurchmesser und 27 m Gesamtlänge, wobei im Abstand von 6 m Pakete aus Statikmischern eingebaut sind,
**4** einem Druckhalteventil,
**5a** einem Entspannungsbehälter von 150 l Rauminhalt mit druckgeregelter Entspannungseinheit,
**6a** einer Zahnrad-Austragspumpe sowie
**7** einer Ausfahreinheit zum Strangpressen, Abkühlen und Granulieren
wurde erfindungsgemäß unter folgenden Bedingungen Polyamid 12 hergestellt:

| | |
|---|---|
| Manteltemperatur in Anlagenteilen **2** bis **6a** | 290 °C |
| Manteltemperatur im Anlagenteil **7** | 270 °C |
| Druck in Anlagenteilen **2** bis **4** | 80 bar |
| Druck im Anlagenteil **5a** | 1,5 bar |
| mittlere Verweilzeit im Anlagenteil **5a** | 2 h |
| Massestrom Laurinlactam | 42 kg/h |
| Massestrom Wasser | 8 kg/h |

Das erhaltene Produkt weist eine helle Farbe auf und besitzt ein Molekulargewicht (Zahlenmittel aus Endgruppenbestimmung) von 14 500. Der Restgehalt an Laurinlactam ist kleiner als 0,3 %. Das Produkt ist frei von Gelbestandteilen.

### Beispiel 2:

Es wird entsprechend Beispiel 1 verfahren mit dem Unterschied, daß hier auf den Kreislaufreaktor verzichtet wird. Die Produkteigenschaften bleiben unverändert, nur der Restmonomergehalt steigt auf 0,5 %.

### Beispiel 3:

Es wird entsprechend Beispiel 1 verfahren, wobei jedoch dem eingespeisten Wasser eine solche Menge hypophosphorige Säure (H₃PO₂) zugesetzt wird, daß die Gesamtmenge, bezogen auf eingespeistes Laurinlactam, 60 ppm beträgt.

Es wird ein qualitativ hochwertiges Produkt entsprechend Beispiel 1 erhalten, das Molekulargewicht beträgt jedoch 19 400.

### Beispiel 4:

Zusätzlich zum Entspannungsbehälter **5a** gemäß Beispiel 1 wird ein weiterer Entspannungsbehälter **5b** sowie eine zusätzliche Zahnrad-Austragspumpe **6b** eingesetzt, wie es in Fig. 1 dargestellt ist.

Die Verfahrensparameter sind:

| | |
|---|---|
| Druck im Anlagenteil **5a** | 2,0 bar |
| Druck im Anlagenteil **5b** | 0,5 bar |
| mittlere Verweilzeit im Anlagenteil **5b** | 2 h |

Ansonsten sind die Parameter entsprechend Beispiel 1. Das erhaltene Produkt weist eine helle Farbe auf und ist frei von Gelbestandteilen. Der Restgehalt an Laurinlactam ist kleiner als 0,3 %. Das Molekulargewicht beträgt 18 700.

## Patentansprüche

1. Verfahren zur kontinuierlichen hydrolytischen Polymerisation von Laurinlactam, wobei Laurinlactam und Wasser durch eine Pumpe dosiert werden, gegebenenfalls einen Reaktor mit weitgehend idealer Rückvermischung durchlaufen, anschließend in einem Rohrreaktor zu einem Präpolymeren reagieren, welches dann über ein Entspannungsventil in ein Entgasungsaggregat entspannt wird, von wo aus es ausgefahren wird,
dadurch gekennzeichnet,
daß
a) der Wassergehalt bei der Präpolymerisation 7 bis 20 Gew.-% beträgt,
b) die Reaktionstemperatur bei der Präpolymerisation 280 bis 320 °C beträgt und
c) das Entspannungsventil so geregelt wird, daß der Arbeitsdruck über dem Wasserdampf-Partialdruck der Reaktionsmischung liegt.

2. Verfahren gemäß Anspruch 1,
dadurch gekennzeichnet,
daß als Reaktor mit weitgehend idealer Rückvermischung ein Schlaufenreaktor verwendet wird.

3. Verfahren gemäß einem der vorhergehenden Ansprüche,
dadurch gekennzeichnet,
daß als Entgasungsaggregat ein Flashbehälter verwendet wird.

4. Verfahren gemäß Anspruch 3,
dadurch gekennzeichnet,
daß im Einlaufbereich des Flashbehälters die Schmelze als Film über die Innenwandung eines beheizten, senkrechten Rohres geleitet wird.

5. Verfahren gemäß einem der vorhergehenden Ansprüche,
dadurch gekennzeichnet,
daß die mittlere Verweilzeit des reagierenden Materials im Rohrreaktor 0,5 bis 6 Stunden und bevorzugt 1,5 bis 4 Stunden beträgt.

6. Verfahren gemäß einem der vorhergehenden Ansprüche,
dadurch gekennzeichnet,
daß der Rohrreaktor ganz oder teilweise mit Statik-Mischelementen ausgestattet ist.

7. Verfahren gemäß einem der Ansprüche 3 bis 6,
dadurch gekennzeichnet,
daß die mittlere Verweilzeit der Schmelze im Flashbehälter 1 bis 3 Stunden beträgt.

8. Verfahren gemäß einem der vorhergehenden Ansprüche,
dadurch gekennzeichnet,
daß die Anlage über eine weitere Entgasungsstufe verfügt.

9. Verfahren gemäß Anspruch 8,
dadurch gekennzeichnet,
daß in der zweiten Entgasungsstufe ein Flashbehälter oder eine Entgasungsschneckenmaschine eingesetzt wird.

10. Verfahren gemäß einem der vorhergehenden Ansprüche,
dadurch gekennzeichnet,
daß an beliebiger Stelle der Anlage Zusatzstoffe eingespeist werden.

## Claims

1. A process for the continuous hydrolytic polymerization of laurolactam, in which laurolactam and water are metered in via a pump, if desired pass through a reactor having largely ideal backmixing, subsequently react in a tube reactor to form a prepolymer which is then depressurized via a depressurization valve into a degassing outfit from which it is discharged, characterized in that
a) the water content in the prepolymerization is from 7 to 20% by weight,
b) the reaction temperature in the prepolymerization is from 280 to 320°C and
c) the depressurization valve is regulated in such a way that the working pressure is above the water vapour partial pressure of the reaction mixture.

2. A process according to claim 1, characterized in that a loop reactor is used as the reactor having largely ideal backmixing.

3. A process according to any one of the preceding claims, characterized in that a flash vessel is used as the degassing outfit.

4. A process according to claim 3, characterized in that in the inflow region of the flash vessel the melt is passed as a film over the internal wall of a heated vertical tube.

5. A process according to any one of the preceding claims, characterized in that the mean residence time of the reacting material in the tube reactor is from 0.5 to 6 hours and preferably from 1.5 to 4 hours.

6. A process according to any one of the preceding claims, characterized in that the tube reactor is completely or partially fitted with static mixer elements.

7. A process according to any one of claims 3 to 6, characterized in that the mean residence time of the melt in the flash vessel is from 1 to 3 hours.

8. A process according to any one of the preceding claims, characterized in that the plant possesses a further degassing stage.

9. A process according to claim 8, characterized in that a flash vessel or a degassing screw machine is used in the second degassing stage.

10. A process according to any one of the preceding claims, characterized in that additives are fed in at any desired point of the plant.

## Revendications

1. Procédé de polymérisation hydrolytique en continu de laurine lactame, dans lequel on dose le laurine lactame et l'eau à travers une pompe, le cas échéant on leur fait parcourir un réacteur à remélange largement idéal, puis on les fait réagir dans un réacteur tubulaire pour obtenir un prépolymère que l'on détend alors par l'intermédiaire d'une soupape de détente dans un appareil de dégazage, dont on les fait sortir,
caractérisé en ce que
a) la teneur en eau dans la prépolymérisation s'élève à 7 à 20 % en poids,
b) la température de la réaction lors de la prépolymérisation est comprise entre 280 et 320°C et
c) la soupape de détente est réglée de manière que la pression de travail se situe au-dessus de la pression partielle de vapeur d'eau du mélange réactionnel.

2. Procédé selon la revendication 1,
caractérisé en ce qu'
on utilise comme réacteur à remélange largement idéal un réacteur en boucle.

3. Procédé selon l'une des revendications précédentes,
caractérisé en ce qu'
on utilise comme appareil de dégazage un ballon de détente.

4. Procédé selon la revendication 3,
caractérisé en ce que
dans la zone d'introduction du ballon de détente on conduit la masse fondue sous la forme d'un film sur la paroi interne d'un tube vertical chauffé.

5. Procédé selon l'une des revendications précédentes,
caractérisé en ce que
le temps de séjour moyen du matériau en réaction dans le réacteur tubulaire s'élève à 0,5 à 6 heures et de préférence à 1,5 à 4 heures.

6. Procédé selon l'une des revendications précédentes,
caractérisé en ce que
le réacteur tubulaire est partiellement ou entièrement équipé d'éléments de mélange statiques.

7. Procédé selon l'une des revendications 3 à 6,
caractérisé en ce que
le temps de séjour moyen de la masse fondue dans le ballon de détente s'élève à 1 à 3 heures.

8. Procédé selon l'une des revendications précédentes,
caractérisé en ce que
l'installation dispose d'un autre palier de dégazage.

9. Procédé selon la revendication 8,
caractérisé en ce qu'
on utilise dans le second palier de dégazage un ballon de détente ou une machine de dégazage à vis sans fin.

10. Procédé selon l'une des revendications précédentes,
caractérisé en ce qu'
on alimente des additifs en un endroit quelconque de l'installation.
